# EUROPEAN PATENT SPECIFICATION

(11) **EP 0 913 096 B1**
(45) Date of publication and mention of the grant of the patent: **26.03.2003**
(21) Application number: 97203350.0
(22) Date of filing: 28.10.1997
(51) Int. Cl.: A23L 1/168, A23L 1/10

(54) **Rice grains to be reconstituted**
Schnellkochende Reiskoerner
Grains de riz à reconstituer

(43) Date of publication of application: 06.05.1999
(73) Proprietor: SOCIETE DES PRODUITS NESTLE S.A., 1800 Vevey (CH)
(72) Inventor: Dupart, Pierre, 8053 Zürich/Witikon (CH); Mohamad Yusoff, Othman, 1814 La Tour-de-Peilz (CH); Reimerdes, Ernst H., 1096 Cully/Villette (CH)
(74) Representative: Wavre, Claude-Alain

(56) References cited:
- EP-A- 0 016 649
- EP-A- 0 300 948
- EP-A- 0 450 310
- BE-A- 561 153
- DATABASE WPI Section Ch, Week 8733 Derwent Publications Ltd., London, GB; Class D13, AN 87-231562 XP002061984 & JP 62 155 059 A (AJINOMOTO KK) , 10 July 1987
- DATABASE WPI Section Ch, Week 7708 Derwent Publications Ltd., London, GB; Class D13, AN 77-13722Y XP002061985 & JP 52 003 843 A (NIHON KEISOKUHIN) , 12 January 1977
- DATABASE WPI Section Ch, Week 9804 Derwent Publications Ltd., London, GB; Class D11, AN 98-033241 XP002061986 & CN 1 135 300 A (XU D) , 13 November 1996

## Description

The subject of the present invention is a process for the preparation of rice grains which may be rapidly reconstituted. The invention also relates to rapidly reconstitutable rice grains.

Usually, quick-cooking reconstitutable rice grains are produced by gelatinizing rice flour and then forming the gelatinized flour into grain shaped pieces.

For example, US 4769251 describes in particular a process for the manufacture of quick-cooking rice products in which a mixture comprising 60-80% of rice flour or granules and 20-40% of water is cooked for 20 seconds to 3 minutes by adding steam, in order to increase its temperature from about 150° F to 210° F. After this preconditioning step, the mixture is introduced into an extruder in which it is sequentially advanced first through a cooking zone, then trough a venting zone and a forming zone.

A problem with this process is that a venting zone is necessary to decrease the water content of the mixture which is added at the beginning to decrease the mechanical energy. Also, the final product requires cooking before it is reconstituted.

In another example, EP 0226375 describes a process for the preparation of a quick-cooking rice-like product in which rice flour and water are mixed, in order to obtain a dough. This dough is then treated in a section of a single or twin screw extruder, preferably a twin screw extruder, at a temperature below the cooking range of the ingredients. In the cooking section of the extruder which has four cooking zones of progressively increasing temperature, between 29.4° C and 104° C, and at a pressure between 6205 kPa and 10342 kPa, the dough is then treated in order to gelatinize totally the starch molecules and to denaturate the proteins. After that the dough is treated in a cooling zone at a temperature between 32.2 and 40.5° C, sized into dimensions simulating rice grains, for example, and dried.

A problem with this process is that a large amount of mechanical energy is required to gelatinize totally the starch molecules. Further quick-cooking rice-like product is soft after rehydration and does not have the texture of rice grains.

JP-A-62155059 disclosed instant rice which is coated with hydrogenated oil in order to improve oxidation stability.

The aim of this invention is to provide a simple and rapid process which makes it possible to produce reconstitutable rice grains which keep their grain shape after rehydration without becoming soft. Another aim is to produce rice grains can rehydrate rapidly and which have a good texture.

Accordingly, in one aspect, this invention provides a process for making reconstitutable rice grains, comprising cooking a mixture of rice flour, water and hydrogenated oil in a cooker-extruder operated at 100-500 rpm and at a temperature of 70-150° C, to produce a partly gelatinized mixture, forming the partly gelatinized mixture into rice grain shaped pieces and drying and cooling the pieces to room temperature to provide reconstitutable rice grains.

It is surprisingly found that the process according to the invention makes it possible to produce rapidly reconstitutable rice grains without requiring large amount of energy. The reconstitutable rice grains according to the invention have the advantage of having pores but not cracks on their surface to allow a quick rehydration with good texture. Furthermore, reconstitutable rice grains according to this invention have the advantage of being resistant to bacteriological contamination.

In order to make use of invention, preferably the extruder-cooker is operated at 120-200 rpm and at a pressure equal or more than 20 bar. Preferably the pressure is 80-160 bar.

Before extrusion cooking, the rice flour can be treated to decrease bacteriological contamination, especially *Bacillus cereus.*

In the present invention, the mixture can contain different qualities of rice flour. This permits a larger range of final textures of the instantly reconstitutable rice grains.

The mixture can contain 2-11% hydrogenated oil, with respect to the total weight content of the rice flour, for example. It is possible to use, as hydrogenated oil, coconut oil, soybean oil, cottonseed oil, palm oil or palm kernel oil, so as to decrease the friction during the extrusion-cooking and to control the water absorption of the reconstituted rice grains. If too much oil is added in the mixture, the reconstitutable rice grains do not absorbe water very well during rehydration.

In the invention the mixture can contain 12-25% water. If the amount of water is more than 25%, the mixture is likely to stick in the extruder-cooker. If the amount of water is below 12%, there is too much mechanical energy during the extrusion-cooking and the mixture gelatinizes totally.

According to the invention the mechanical energy used during the extrusion-cooking is preferably less than or equal to 115 watt per kilogram of the mixture, in order not to gelatinize the starch fraction of the rice flour to more than 85% and to form extrudates in a shape of rice grains. During the extrusion-cooking, the level of mechanical energy used is very low owing to the quantity of water and the quantity of oil contained in the mixture.

A desirable extruder-cooker for the practice of the process of this invention is a twin screw extruder-cooker in which the processing section can be made up of two identical intermeshing screws, rotating in the same direction in the bore of a fixed barrel to produce different amount of compression and rates of flow of the ingredients within the extruder barrel.

In the preferred embodiment an extruder-cooker having a 600-1700 millimeters barrel with 3 to 8 heating zones, a mixing zone and 1 to 3 cooling zone is used.
In the present invention the mixture is forced through the barrel where the ingredients are mixed, compressed and cooked. The mixture is formed at the end of the barrel and exits as instantly reconstitutable rice grains with pores on their surface.

At the end of the barrel, the excess of steam is released so as to increase the porosity of the instantly reconstitutable rice grains.

On account of the conditions of the extrusion-cooking, the bacteriological contamination is reduced during this stage.

It is possible to add to the mixture aroma, spices and/or coloring agents before or after the extrusion-cooking, for example.

It is possible to use as aroma, chicken, beef, pork, tomato, red pepper, green pepper and/or mushroom, for example.

It is possible to use, as spices, paprika, pepper and/or curry, for example.

It is possible to add 0.2 to 2.5% of hydrocolloids, like alginates, guar or xanthan gum, to the mixture before or after the extrusion-cooking. This increases the quality of the texture of the instantly reconstitutable rice grains. Preferably, alginates which can be extracted from seaweed, like *Laminaria hyperborea* or *Laminaria digita,* are used.

It is possible to fry the pieces before drying them to increase the amount of oil in the final product. This delays the rehydration of the reconstitutable rice grains in food products, like a soup, for example. In this case, the rice will be not an instantly reconstitutable rice.

The instantly reconstitutable rice grains are dried before being cooled to room temperature. The instantly reconstitutable rice grains are preferably dried in order that their moisture content is below 11%.

In another aspect, this invention provides rapidly reconstitutable rice grains comprising a partly gelatinised matrix of a rice flour which contains a hydrogenated oil. The rice grains reconstitute instantly in hot water and have a good texture. Preferably the rice grains are instantly reconstitutable in hot water.

The instantly reconstitutable rice grains according to the invention have pores on their surface to allow quick rehydration.

The density of the instantly reconstitutable rice grains is 0.3-0.7 kg/l. The lower the density, the higher the porosity and the faster the rehydration.

The value of water uptake after 2 to 6 min of rehydration is 0.70-3.2 g per g of reconstitutable rice grains. The lower the mechanical energy, the lower the water uptake during rehydration and the harder the reconstitutable rice grains.

The preparation process and the rice grains according to the invention are described in more detail in the examples below where the percentages are given by weight, except when otherwise indicated.

### Example 1

A mixture containing 74 kg of rice flour, 0.8 kg of salt, 12.9 kg of water and 3.4 kg of soybean oil is extrusion-cooked in twin screw extruder of 1200 milimeters in length. The extrusion-cooker is operated at 180 rpm and the pressure in the extruder-cooker is 154 bar.

During the extrusion-cooking, the mixture is heated in 3 zones at 50° C, 110° C and 115° C, mixed and then cooled in 2 zones at 50° C and 60° C. The mixture is then extruded in the shape of rice grains.

After the extrusion-cooking, the instantly reconstitutable rice grains are dried until their moisture content decreases to 5%. the density of the instantly reconstitutable rice grain is 0.58 kg/l.

The instantly reconstitutable rice grains are then cooled to room temperature before being packaged in a hermetically closed plastic sachet and then stored at room temperature.

### Example 2

A mixture containing 125.65 kg of rice flour, 0.63 kg of salt, 0.4 kg of sodium biphosphate, 29 kg of water and 12.48 kg of soybean oil is extrusion-cooked in twin screw extruder of 1500 milimeters in length. The extrusion-cooker is operated at 217 rpm and the pressure in the extruder-cooker is 166 bar.

During the extrusion-cooking, the mixture is heated in 2 zones at 80° C and 100° C, mixed and then cooled in 2 zones at 15° C and 10° C. The mixture is then extruded in the shape of rice grains.

After the extrusion-cooking, the rice grains are dried and cooled as described in Example 1.

The density of the reconstitutable rice grain is 0.38 kg/l.

### Example 3

A mixture containing 122.34 kg of rice flour, 0.62 kg of salt, 0.4 kg of sodium biphosphate, 1.24 kg of alginate, 29 kg of water and 12.49 kg of soybean oil is extrusion-cooked in twin screw extruder of 1500 milimeters in length. The extrusion-cooker is operated at 218 rpm and the pressure in the extruder-cooker is 126 bar.

During the extrusion-cooking, the mixture is heated in 2 zones at 80° C, mixed and then cooled in 2 zones at 50° C and 40° C. The mixture is then extruded in the shape of rice grains.

After the extrusion-cooking, the rice grains are dried and cooled as described in Example 1.

The density of the instantly reconstitutable rice grain is 0.53 kg/l.

### Example 4

A mixture containing 100 kg of rice flour, 0.5 kg of salt, 11.8 kg of water and 2.4 kg of palm oil is extrusion-cooked in twin screw cooker extruder of 1200 milimeters in length. The extrusion-cooker is operated at 160 rpm.

During the extrusion-cooking, the mixture is heated in 3 zones at 80° C, 110° C and 120° C, mixed and then cooled in 2 zones at 50° C and 46° C. The mixture is then extruded in the shape of rice grains.

After the extrusion-cooking, the reconstitutable rice grains are dried until their moisture content decreases to 5%.

The reconstitutable rice grains are then cooled to room temperature before being packaged in a hermetically closed plastic sachet and then stored at room temperature.

### Example 5

A curried rice dish is produced using instant reconstitutable rice grains prepared in a manner similar to that described in Example 1.

To do this, 73% of rice grains according to the invention, 12% of maltodextrin, 10% of dried vegetables, 3.6% of curry powder, 0.4% of yeast extract and 1% of salt are mixed together.

This mixture is poured into a cup to which hot water is added. The rice grains reconstitute instantly to provide a curried rice dish with a good taste and a nice texture. After 2 to 5 min of soaking, this food preparation can be eaten.

### Example 6

Vegetable porridge is produced using instantly reconstitutable rice grains prepared in a manner similar to that described in Example 1.

50 g of instantly reconstitutable rice grains and 15 g of a spice mixture are mixed together. The spice mixture contains 11.8% of salt, 0.02% of garlic, 0.08% of pepper powder, 3.3% of sodium monoglutamate, 4.5% of corn starch, 3.8% of sugar, 2% of onion powder, 65.5% of potato flakes, 5% of dehydrated carrots, 2% of dehydrated onions and 2% of dehydrated parsley.

Boiling water is added to this preparation which is soaked for 2 to 5 min, before the consumption. The instantly reconstitutable rice grains in this vegetable porridge have a nice texture and a good taste.

## Claims

1. Process for the preparation of reconstitutable rice grains comprising:
- cooking a mixture of rice flour, water and hydrogenated oil in a cooker-extruder operated at 100-500 rpm and at a temperature of 70-150° C, to produce a partly gelatinized mixture,
- forming the partly gelatinized mixture into rice-grain shaped pieces, and
- drying and cooling the pieces to room temperature to provide the reconstitutable rice grains.

2. Process according to claim 1, in which the mixture contains 12-25% of water and 2-11% of hydrogenated oil, with respect to the total weight of the rice flour.

3. Process according to claim 1 or 2, in which the mechanical energy used during extrusion cooking is less than or equal to 115 watt per kilogram of the mixture.

4. Process according to any of claims 1 to 3, in which aroma, spices and/or coloring agents are added to the mixture before or after the extrusion cooking.

5. Process according to any of claims 1 to 4, in which 0.2 to 2.5% of hydrocolloids are added to the mixture before or during the extrusion cooking.

6. Process according to any of claims 1 to 5, in which the pieces are fried before being dried.

7. Process according to any of claims 1 to 4, in which the partly gelatinised mixture has a degree of gelatinisation of not more than 85%.

8. Rapidly reconstitutable rice grains comprising a partly gelatinised matrix of a rice flour which contains a hydrogenated oil.

9. Rapidly reconstitutable rice grains according to claim 8 which have pores on their surface.

10. Rapidly reconstitutable rice grains according to claims 8 or 9 which have a density of 0.3-0.7 kg/l.

## Patentansprüche

1. Verfahren zur Herstellung rekonstituierbarer Reiskörner, das umfaßt:
- Kochen einer Mischung aus Reismehl, Wasser und einem hydrierten Öl in einem Kochextruder, der bei 100-500 U/min und einer Temperatur von 70-150°C betrieben wird, um eine teilweise verkleisterte Mischung herzustellen,
- Formen der teilweise verkleisterten Mischung in Stücke von Reiskornform, und
- Trocknen und Füllen der Stücke auf Raumtemperatur, um die rekonstituierbaren Reiskörner zu erzeugen.

2. Verfahren nach Anspruch 1, bei dem die Mischung 12-25% Wasser und 2-11% hydriertes Öl enthält, und zwar bezogen auf das Gesamtgewicht des Reismehls.

3. Verfahren nach Anspruch 1 oder 2, bei dem die während der Kochextrusion angewandte mechanische Energie niedriger oder gleich 115 Watt/kg der Mischung ist.

4. Verfahren nach irgendeinem der Ansprüche 1 bis 3, bei dem der Mischung vor oder nach der Kochextrusion Aroma, Gewürze und/oder Färbemittel zugesetzt werden.

5. Verfahren nach irgendeinem der Ansprüche 1 bis 5, bei dem der Mischung vor oder während der Kochextrusion 0,2 bis 2,5% Hydrokolloide zugesetzt werden.

6. Verfahren nach irgendeinem der Ansprüche 1 bis 5, bei dem die Stücke frittiert werden, bevor sie getrocknet werden.

7. Verfahren nach irgendeinem der Ansprüche 1 bis 3, bei dem die teilweise verkleisterte Mischung einen Verkleisterungsgrad von nicht mehr als 85% aufweist.

8. Rasch rekonstituierbare Reiskörner, die eine teilweise verkleisterte Matrix aus einem Reismehl aufweisen, das ein hydriertes Öl enthält.

9. Rasch rekonstituierbare Reiskörner nach Anspruch 8, die an ihrer Oberfläche Poren aufweisen.

10. Rasch rekonstituierbare Reiskörner nach den Ansprüchen 8 oder 9, die eine Dichte von 0,3 bis 0,7 kg/l aufweisen.

## Revendications

1. Procédé pour la préparation de grains de riz reconstituables comprenant les étapes consistant à :
- cuire un mélange de farine de riz, d'eau et d'huile hydrogénée dans un dispositif de cuisson-extrusion fonctionnant entre 100 et 500 tours par minute et à une température comprise entre 70 et 150°C pour former un mélange partiellement gélatinisé,
- former le mélange partiellement gélatinisé en morceaux en forme de grains de riz, et
- sécher et refroidir les morceaux à température ambiante pour fournir des grains de riz reconstituables.

2. Procédé selon la revendication 1, dans lequel le mélange contient 12 à 25% d'eau et 2 à 11% d'huile hydrogénée par rapport au poids total de la farine de riz.

3. Procédé selon la revendication 1 ou 2, dans lequel l'énergie mécanique utilisée au cours de la cuisson-extrusion est inférieure ou égale à 115 watts par kilogramme de mélange.

4. Procédé selon l'une quelconque des revendications 1 à 3, dans lequel des arômes, des épices et/ou des agents colorants sont ajoutés au mélange avant ou après la cuisson-extrusion.

5. Procédé selon l'une quelconque des revendications 1 à 4, dans lequel 0,2 à 2,5% d'hydrocolloïdes sont ajoutés au mélange avant ou après la cuisson-extrusion.

6. Procédé selon l'une quelconque des revendications 1 à 5, dans lequel les morceaux sont frits avant d'être séchés.

7. Procédé selon l'une quelconque des revendications 1 à 4, dans lequel le mélange partiellement gélatinisé présente un degré de gélatinisation inférieur à 85%.

8. Grains de riz reconstituables rapidement comprenant une matrice partiellement gélatinisée de farine de riz qui contient une huile hydrogénée.

9. Grains de riz reconstituables rapidement selon la revendication 8, lesdits grains présentant des pores à leur surface.

10. Grains de riz reconstituables rapidement selon la revendication 8 ou 9 lesdits grains présentant une densité de 0,3 à 0,7 kg/l.
